# EUROPEAN PATENT APPLICATION

(11) **EP 2 402 900 A1**
(43) Date of publication of application: **04.01.2012**
(21) Application number: 11166275.5
(22) Date of filing: 16.05.2011
(51) Int. Cl.: G06Q 30/00

(54) **System and method for downloading and displaying ads**

(30) Priority: 29.06.2010 US 359625 P; 05.11.2010 US 940157
(71) Applicant: RESEARCH IN MOTION LIMITED, Waterloo, Ontario N2L 3W8 (CA)
(72) Inventor: Smith, Andrew Christopher, Waterloo Ontario N2L 3X2 (CA); Murphy, Kristin Gerald, Waterloo Ontario N2L 3X2 (CA); Morley, Paul Douglas, Corinth, TX 76210 (US); Cui, Wei Jiang (Virgil), Mississauga Ontario L4W 0B5 (CA)
(74) Representative: Moore, Barry

(57) **Abstract**

There is disclosed a system and method for downloading and displaying advertisements during software installation on the device. In an embodiment, the method comprises: receiving a selection of one or more software installation options and considering any additional criteria for selection of an initialization file; in dependence upon the selection of one or more installation options and any additional criteria, downloading a corresponding initialization file; reading the downloaded initialization file for a list of one or more advertisement files to be downloaded to the device and played back in accordance with playback parameters provided in the initialization file; and downloading the list of advertisement files and displaying the advertisement files during the software installation in accordance with the playback parameters.

## Description

This application claims priority from United States Application No. 61/359,625, filed June 29, 2010, and from United States Patent Application No. 12/940,157, filed November 5, 2010.

The present disclosure relates generally to a system and method for downloading and displaying ads, particularly during software installations on devices and servers.

### Brief Description of the Drawings

In the figures which illustrate exemplary embodiments:
FIG. 1 is an illustration of a mobile handheld device in accordance with an embodiment;
FIG. 2 is a schematic block diagram illustrating components of an exemplary configuration of a host environment;
FIG. 3 is a schematic block diagram illustrating components of an exemplary configuration of a system in accordance with an embodiment; and
FIG. 4 is a schematic flowchart of a method in accordance with an embodiment.

### Detailed Description

As noted above, the present disclosure relates to a system and method for downloading and displaying advertisements or "ads", particularly during software installation on devices and servers.

The need to install a certain version of software on certain devices or servers may exist for many months, or even several years after the software version has been released to the market on suitable computer readable media, such as installation CDs or DVDs. For example, this may be due to the customer expanding their use and deployment of the software. If the customer is adding more users and therefore requires additional servers, the customer may still have the software media that they previously purchased and can add additional servers to service these users. The customer could also potentially conduct a full reinstallation after a device or server has been serviced or upgraded, or if a device is being redeployed.

During the software installation process, when the installation is proceeding without the need for user input, it may be desirable to run ads relating to the software or services that may be provided. However, if a software version was initially released months or years before the installation, any ads shipped with the software may be out-of date and may be promoting obsolete products and services. What is needed is an improved way to display ads during software installations such that the content of the ads is up-to-date and relevant.

As will be explained in more detail below, what is proposed is to download and display ads dynamically, such that the ads may be changed often to allow the ad content to remain current and relevant, particularly to one or more software installation selections made by a customer, regardless of whether the installation software was initially released months or years before the installation takes place.

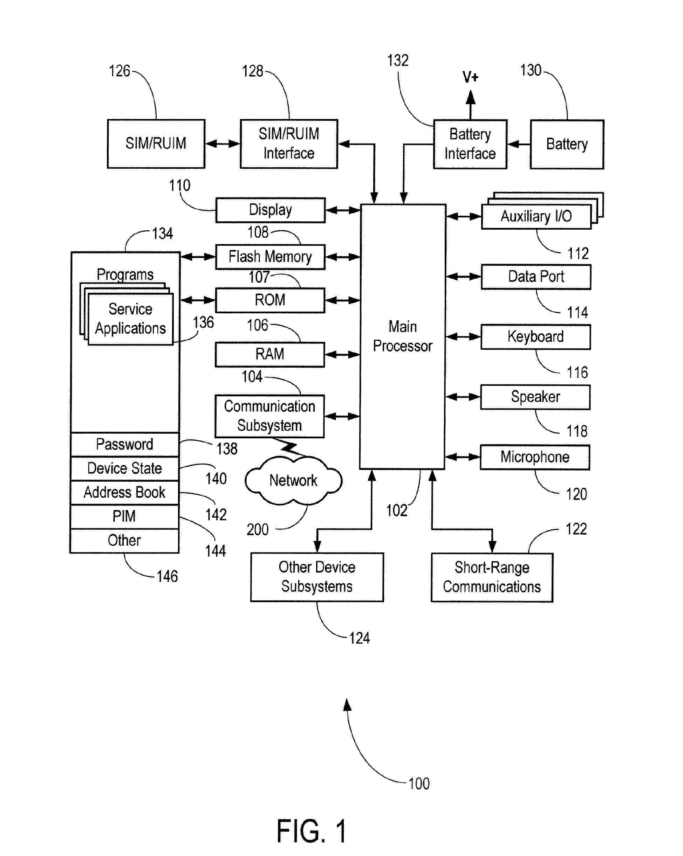

Shown in FIG. 1 is a schematic block diagram of illustrative mobile communications device 100. The communications device 100 may comprise a number of components, including a main processor 102 which controls the overall operation of communications device 100. Communication functions, including data and voice communications, may be performed through a communication subsystem 104. The communication subsystem 104 may receive messages from and sends messages to a wireless network 200. In this illustrative embodiment of the communications device 100, the communication subsystem 104 may be configured, for example, in accordance with the Global System for Mobile Communication (GSM) and General Packet Radio Services (GPRS) standards, Enhanced Data GSM Environment (EDGE), or Universal Mobile Telecommunications Service (UMTS). Other standards are still being defined, but it is believed that they will have similarities to the network behaviour described herein, and it will also be understood by persons skilled in the art that the embodiments described herein are intended to use any other suitable standards that may be developed in the future.

The main processor 102 may also interact with additional subsystems such as a random access memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the communications device 100 may perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list. Operating system software used by the main processor 102 is typically stored in a persistent store such as the flash memory 108, which may alternatively be a read-only memory (ROM) 107 or similar storage element (not shown). Those skilled in the art will appreciate that the operating system, specific device applications, or parts thereof, may be temporarily loaded into a volatile store such as the RAM 106.

The communications device 100 may send and receive communication signals over the wireless network 200 after required network registration or activation procedures have been completed. Network access may be associated with a subscriber or user of the communications device 100. To identify a user, the communications device 100 may require a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a user of the communications device 100 and to personalize the communications device 100, among other things. Without the SIM card 126, the communications device 100 is not fully operational for communication with the wireless network 200. By inserting the SIM card/RUIM 126 into the SIM/RUIM interface 128, a user can access all subscribed services. Services may include: web browsing and messaging such as email, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the user, the SIM card/RUIM 126 contains some user parameters such as an International Mobile Subscriber Identity (IMSI). An advantage of using the SIM card/RUIM 126 is that a user is not necessarily bound by any single physical communications device. The SIM card/RUIM 126 may store additional user information for a communications device as well, including datebook (or calendar) information and recent call information. Alternatively, user identification information can also be programmed into the flash memory 108.

The communications device 100 may be a battery-powered device and may include a battery interface 132 for receiving one or more rechargeable batteries 130. In some embodiments, the battery 130 may be a smart battery with an embedded microprocessor. The battery interface 132 is coupled to a regulator (not shown), which assists the battery 130 in providing power V+ to the communications device 100. Although current technology makes use of a battery, future technologies such as micro fuel cells may provide the power to the communications device 100.

The main processor 102, in addition to its operating system functions, enables execution of software applications 134 on the communications device 100. The subset of software applications 134 that control basic device operations, including data and voice communication applications, will normally be installed on the communications device 100 during its manufacture. The software applications 134 may include various service applications 136 such as a message module. Other applications may include a password approval module 138, device state module 140, address book 142, a Personal Information Manager (PIM) 144, and various other modules 146.

Additional applications may also be loaded onto the communications device 100 through at least one of the wireless network 200, the auxiliary I/O subsystem 112, the data port 114, the short-range communications subsystem 122, or any other suitable device subsystem 124. This flexibility in application installation increases the functionality of the communications device 100 and may provide enhanced on-device functions, communication-related functions, or both. For example, secure communication applications may enable electronic commerce functions and other such financial transactions to be performed using the communications device 100.

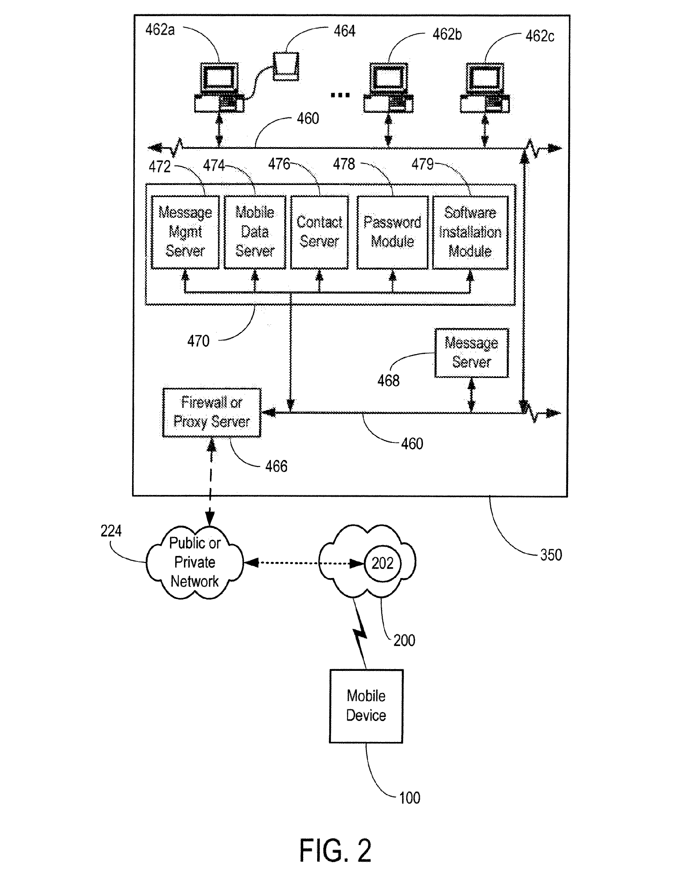

Referring now to FIG. 2, shown therein is a block diagram illustrating components of an exemplary configuration of a host environment 350. In one instance, the host environment 350 can be a corporate enterprise. The host environment 350 will typically be a corporate office or other local area network (LAN), but may also be a home office computer system or some other private system, for example, in variant implementations. In the example shown in FIG. 2, the host environment 350 is depicted as a LAN of an organization to which a user of the communications device 100 belongs. Typically, a plurality of communications devices can communicate wirelessly with the host environment 350 through one or more nodes 202.

The host environment 350 comprises a number of network components connected to each other by the LAN connections 460. For instance, a user's desktop computer 462a with an accompanying cradle 464 for the user's communications device 100 is situated on a LAN connection. The cradle 464 for the communications device 100 can be coupled to the computer 462a by a serial or a Universal Serial Bus (USB) connection, for example. Other user computers 462b are also situated on the LAN 460, and each may or may not be equipped with an accompanying cradle 464 that is suitable for a communications device. The cradle 464 facilitates the loading of information (e.g. PIM data, private symmetric encryption keys to facilitate secure communications between the communications device 100 and the host environment 350, etc.) from the user computer 462a to the communications device 100, and may be particularly useful for bulk information updates often performed in initializing the communications device 100 for use. The information downloaded to the communications device 100 may include certificates used in the exchange of messages.

In this exemplary embodiment, the communications device 100 communicates with the host environment 350 through node 202 of the wireless network 200 and a shared network infrastructure 224 such as a service provider network or the public Internet. Access to the host environment 350 may be provided through one or more routers (not shown), and computing devices of the host environment 350 may operate from behind a firewall or proxy server 466. The proxy server 466 provides a secure node and a wireless Internet gateway for the host environment 350. The proxy server 466 intelligently routes data to the correct destination server.

Messages intended for a user of the communications device 100 are initially received by a message server 468 of the host environment 350. Such messages may originate from any number of sources. For instance, a message may have been sent by a sender from the computer 462b within the host environment 350, from a different communications device (not shown) connected to the wireless network 200 or to a different wireless network, or from a different computing device or other device capable of sending messages, via the shared network infrastructure 224, possibly through an application service provider (ASP) or Internet service provider (ISP), for example.

When operating the communications device 100, the user may wish to have email messages retrieved for delivery to the handheld. An email client application operating on the communications device 100 may also request messages associated with the user's account from the message server 468. The email client may be configured (either by the user or by an administrator, possibly in accordance with an organization's information technology (IT) policy) to make this request at the direction of the user, at some pre-defined time interval, or upon the occurrence of some pre-defined event. In some implementations, the communications device 100 is assigned its own email address, and messages addressed specifically to the communications device 100 are automatically redirected to the communications device 100 as they are received by the message server 468.

To facilitate the wireless communication of messages and message-related data between the communications device 100 and components of the host environment 350, a corporate enterprise server 470 containing a number of wireless communication support components may be provided. Corporate enterprise server 470 may be embodied, for example, in dedicated server hardware requiring installation of an operating system and application software. In some implementations, the corporate enterprise server 470 can include a message management server 472, a mobile data server 474, a contact server 476, a password policy module 478, a software installation module 479, and the like.

In order to provide or update functionality to the corporate enterprise server 470, it is necessary to install software on the corporate enterprise server 470 from time-to-time. However, as noted above, a new approach is required to displaying ads so that the ads are up-to-date and relevant.

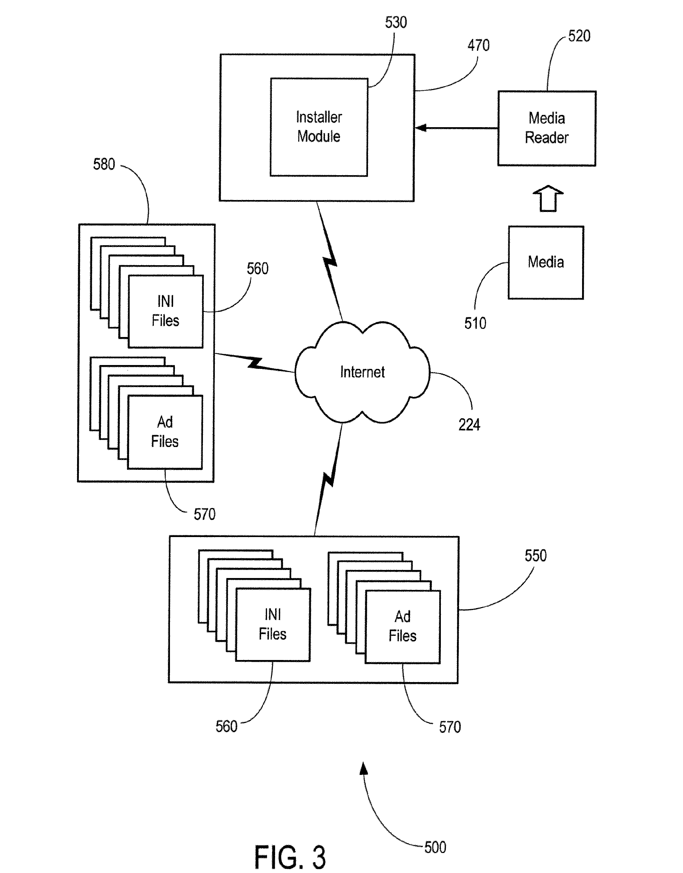

Now referring to FIG. 3, shown is a schematic of a system 500 in accordance with an embodiment for downloading and displaying ads during installation of software on the illustrative corporate enterprise server 470. As shown, corporate enterprise server 470 is operatively connected to a media reader 520 for reading computer readable software installation media 510. For example, the computer readable software installation media 510 may be optical disks such as CDs or DVDs, or any other suitable physical media for storing software code including magnetic media or solid state media. Software installation module 479 (FIG. 2) may be adapted to operatively connect server 470 to media reader 520 via a suitable device driver, and to read software code stored on an inserted software installation media 510.

In an embodiment, software installation media 510 storing software to be installed in server 470 is placed into media reader 520. After media 510 is loaded, software code stored on media 510 begins loading onto server 470. An installer module 530 may be first installed onto server 470 to begin the installation process.

In an embodiment, installer module 530 automatically determines the software product and version stored on media 510 which will be installed onto server 470.

In another embodiment, installer module 530 displays a list of installation options requiring selection before further loading of software code onto server 470. For example, the installation options may include an installation language selection. Also, instead of automatic determination of the software product and version to be installed, installer module 530 may display a list of installation options for selection of a software product and version stored on software installation media 510.

In another embodiment, the installer module 530 may further check whether the server 470 has an available connection to the Internet 224. If the server does not have a connection to the Internet 224, the installer module 530 may display a set of default ads stored locally in the software installation media 510, although the default ads may be more generic and perhaps not be up-to-date.

Upon determining that a connection to the Internet 224 exists, and determining the selected installation language, installer module 530 may download additional software for installation, or an initialization file for downloading and displaying ads, as will be described in further detail below.

In another embodiment, in addition to determining the availability of a connection to Internet 224, the Internet connection speed may be determined as well, and this may determine the type of ads to be downloaded. For example, if the Internet connection is a high-speed connection, then high resolution video ads may be downloaded. If the Internet connection is too slow to accommodate high resolution video ads, then a lower resolution video ad may be selected, or photos may be downloaded instead to play as a slideshow.

In another embodiment, installer module 530 may determine in which geographic location a device (e.g. server 470) is located, and may use other information to select an initialization file. For example, installer module 530 may also determine the hardware model of a device on which the software is being installed. Installer module 530 may be adapted to then locate and access an initialization file which corresponds to the selected hardware model from another server (e.g. server 550 or server 580) accessible via the Internet 224.

In another embodiment, installer module 530 may also determine in which geographic region the hardware device is located, based on the unique IP address of the device. Thus, in addition to language, installer module 530 may be adapted to locate and access an initialization file corresponding to a specific geographic region or country.

In another embodiment, in addition to determining the hardware model of a device, installer module 530 may be adapted to further determine which application modules have been selected for installation from media 510. Installer module 530 may then be adapted to access an initialization file corresponding to the installation options selected.

In an embodiment, installer module 530 may be adapted to access an ads server 550 to locate an initialization file specifically corresponding to one or more of the selected options, including the software product and version being installed, and the installation language selection. Additional information may also be used, such as the hardware model, and which optional application modules have been selected for installation. Once located, the appropriate initialization file can be downloaded to the server 470 to begin downloading of ads during further installation of software code.

In an illustrative example, ads server 550 may be an FTP server which stores initialization or INI files 560 corresponding to the hardware model for server 470, the installation language selected, and other installation options such as which application modules are to be installed from media 510. In an embodiment, each INI file 560 includes information which may direct installer module 530 to download a list of one or more ads that correspond to, or are relevant to, the hardware model for server 470, the selected installation language, or other selected installation options including the application modules selected to be installed from media 510.

In an embodiment, each initialization file may contain information about ads that are relevant to a specific software product and version, and which are in the selected installation language. Such ads may be grouped together in a downloadable zip package, and playback information about the ads can also be provided. In an embodiment, the zip package is downloaded and extracted, and the individual ads are played. The duration to play each ad is also indicated.

In an embodiment, the initialization file can also contain the location from where the ads can be downloaded so that the ads could be located on virtually any server accessible via the Internet 224. The INI files 560 may include the URL addresses where the list of relevant ads 570 can be downloaded from, based on the installation selections. For example, the URL addresses may specify ads 570 targeted towards customers installing certain application modules which enable certain functions on server 470. As another example, the ads 570 may communicate that a newer version of the application module is available with enhanced functionality for an upgrade, or the ad may specify other modules that may be added to enhance functionality of the application modules being installed. The URL addresses may also point to ads 570 recorded in different languages, such that only ads 570 in the appropriate language are downloaded to be played during installation of software from media 510.

In an embodiment, rather than providing ads from just one product manufacturer or supplier, the initialization files may be adapted to point to ads from third-parties who may want to promote related products or services. As the initialization files may point to any ads files via a URL, the third-party ads may be located separately and updated by the third-party. The third-party may be required to pay an advertising fee to purchase ad space during the installation process.

In an embodiment, the ads 570 may be stored together with the INI files 560 on ads server 550. However, alternatively, the ads 570 and copies of the INI files 560 may also be stored on a separate server 580 accessible via the Internet 540. In this manner, multiple copies of the INI files 560 and ads 570 may be available on a number of servers such that there is redundancy, and also so that the ads 570 can be downloaded to multiple servers 470 simultaneously if many installations are occurring at one time. In an embodiment, the installer module 530 may point to an alias, which could have many servers associated with it, so that there is redundancy built in.

In another embodiment, each INI file 560 may specify playback parameters for the ads 570, such as the playback order, playback duration, and playback interval. These playback parameters may be determined, for example, based on the length of time a video ad 570 runs, and the delay between displaying each ad 570 in order to accommodate the software installation. The length of time for displaying ads 570 and the delay between ads 570 may be specified in any suitable time interval, such as seconds or minutes, for example. Also, the playback parameters may specify that ads 570 are to be displayed only during available wait periods during software installation, but not during states when a response is required to continue with the installation process. The playback parameters may also specify that software installation steps should take precedence, such that the playback of ads may be interrupted at any time when the software installation process requires attention.

In an embodiment, each INI file 560 may also contain information on the installation language selected. The language section of each INI file 560 may contain fields of information, including the name of each ad file 570 that is to be downloaded for that language, the number of ads 570 in that language, and the length of the ads 570 in seconds. In an embodiment, the number of ads 570 may be determined by the number of application modules being installed on server 470, so that the ads 570 do not need to be repeated during the software installation process.

In an embodiment, the ads 570 may comprise pictures, video, sounds, text, or any combination of these communicating audio and/or visual information. For example, the ads 570 may be video recordings with sound stored in a compressed video format, such as the AVI (Audio/Video Interleave) format. It will be appreciated, however, that the ads 570 may be prepared in any one of a number of different file formats for pictures, sounds, text, or video, or any combination of these.

In an embodiment, the ads may be stored in a compressed format, such as a downloadable zip package from which the ads can be extracted.

Preferably, the INI files 560 stored on ads server 550 may be updated at any time to point to new ads 570 that have been created, or to point to new versions of ads 570 that replace older ads 570. The INI files 560 can also specify the parameters for playback of the ads 570, as discussed above. In this manner, regardless of when the software installation media 510 was first created, even if years before the software installation, the ads 570 that are played during the installation process may be always be up-to-date, and relevant to the hardware device, installation language, and other installation options, including the application modules being installed.

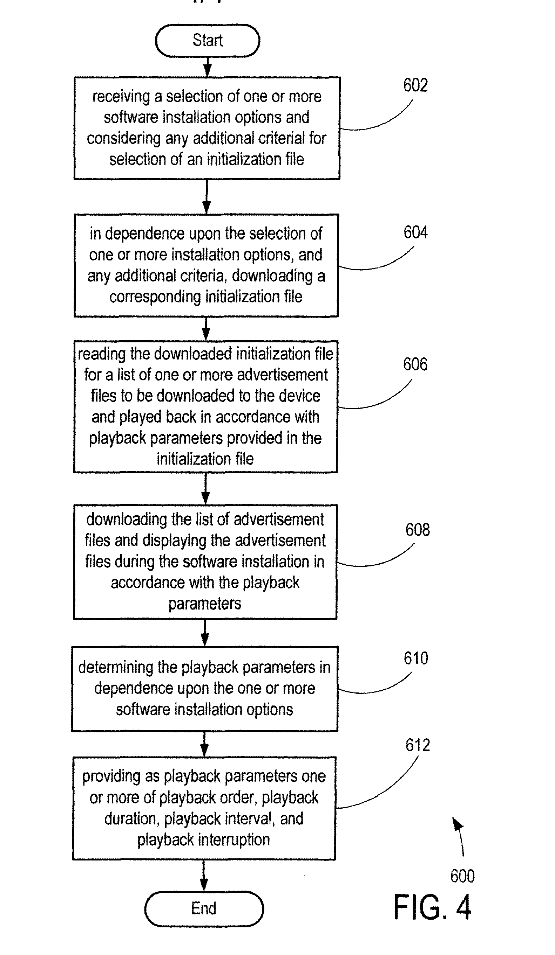

Now referring to FIG. 4, shown is a schematic flowchart of a method 600 in accordance with an embodiment. As shown, method 600 begins at block 602, where method 600 receives a selection of one or more software installation options, and considers any additional criteria for selection of an initialization file. For example, installation options may include selection of a software product and version, and selection of an installation language. As well, additional criteria for selection of an initialization file may include the hardware model for the device on which software is to be installed, existence of an Internet connection, the speed of the Internet connection, and the geographic region of the device based on the IP address.

Method 600 then proceeds to block 604, where method 600 downloads a corresponding initialization file in dependence upon the selection of one or more installation options and any additional criteria.

Method 600 then proceeds to block 606, where method 600 reads the downloaded initialization file for a list of one or more advertisement files to be downloaded to the device and played back in accordance with playback parameters provided in the initialization file.

Method 600 then proceeds to block 608, where method 600 downloads the list of advertisement files and displays the advertisement files during software installation in accordance with the playback parameters.

Method 600 then proceeds to block 610, where method 600 determines the playback parameters in dependence upon the one or more software installation options.

Method 600 then proceeds to block 612, where method 600 may provide as playback parameters one or more of playback order, playback duration, playback interval, and playback interruption. Method 600 then ends.

Thus, in one aspect, there is provided a method executable on a computing device for downloading and displaying advertisements during software installation on the device, comprising: receiving a selection of one or more software installation options and considering any additional criteria for selection of an initialization file; in dependence upon the selection of one or more installation options and any additional criteria, downloading a corresponding initialization file; reading the downloaded initialization file for a list of one or more advertisement files to be downloaded to the device and played back in accordance with playback parameters provided in the initialization file; and downloading the list of advertisement files and displaying the advertisement files during the software installation in accordance with the playback parameters.

In an embodiment, the method further comprises determining the playback parameters in dependence upon the one or more software installation options.

In another embodiment, the method further comprises providing as playback parameters one or more of playback order, playback duration, playback interval, and playback interruption.

In another embodiment, the selection of one or more installation options includes selection of a software product and version and an installation language, and the list of one or more advertisement files in the initialization file corresponds to the selected software product and version and the installation language.

In another embodiment, the advertisement file is any one of pictures, video, sounds, text, or any combination.

In another embodiment, the initialization file is downloaded from an ftp server via an Internet connection.

In another embodiment, the list of one or more advertisement files in the initialization file provides one or more URL addresses pointing to the locations of the advertisement files.

In another aspect, there is provided a system for downloading and displaying advertisements during software installation on the device, the system adapted to: receive a selection of one or more software installation options and considering any additional criteria for selection of an initialization file; in dependence upon the selection of one or more installation options and any additional criteria, download a corresponding initialization file; read the downloaded initialization file for a list of one or more advertisement files to be downloaded to the device and played back in accordance with playback parameters provided in the initialization file; and download the list of advertisement files and displaying the advertisement files during the software installation in accordance with the playback parameters.

In an embodiment, the system is further adapted to determine the playback parameters in dependence upon the one or more software installation options.

In another embodiment, the system is further adapted to provide as playback parameters one or more of playback order, playback duration, playback interval, and playback interruption.

In another embodiment, the selection of one or more installation options includes selection of a software product and version and an installation language, and the list of one or more advertisement files in the initialization file corresponds to the selected software product and version and the installation language.

In another embodiment, the advertisement file is any one of pictures, video, sounds, text, or any combination.

In another embodiment, the initialization file is downloaded from an ftp server via an Internet connection.

In another embodiment, the list of one or more advertisement files in the initialization file provides one or more URL addresses pointing to the locations of the advertisement files.

In another aspect, there is provided a computer readable media storing computer code that when loaded onto a device adapts the device to download and display advertisements during software installation on the device, the computer readable media comprising: code for receiving a selection of one or more software installation options and considering any additional criteria for selection of an initialization file; code for downloading a corresponding initialization file in dependence upon the selection of one or more installation options and any additional criteria; code for reading the downloaded initialization file for a list of one or more advertisement files to be downloaded to the device and played back in accordance with playback parameters provided in the initialization file; and code for downloading the list of advertisement files and displaying the advertisement files during the software installation in accordance with the playback parameters.

In an embodiment, the computer readable media further comprises code for determining the playback parameters in dependence upon the one or more software installation options.

In another embodiment, the computer readable media further comprises code for providing as playback parameters one or more of playback order, playback duration, playback interval, and playback interruption.

In another embodiment, the selection of one or more installation options includes selection of a software product and version and an installation language, and the list of one or more advertisement files in the initialization file corresponds to the selected software product and version and the installation language.

In another embodiment, the advertisement file is any one of pictures, video, sounds, text, or any combination.

In another embodiment, the computer readable media further comprises code for downloading the initialization file from an ftp server via an Internet connection.

While illustrative embodiments have been described above, it will be appreciated that various changes and modifications may be made. More generally, the scope of the claimed subject-matter is defined by the following claims.

## Claims

1. A method executed on a computing device to download and display advertisements during software installation on the device, the method comprising:
receiving a selection of one or more software installation options and considering any additional criteria for selection of an initialization file;
in dependence upon the selection of one or more installation options and any additional criteria, downloading a corresponding initialization file;
reading the downloaded initialization file for a list of one or more advertisement files to be downloaded to the device and played back in accordance with playback parameters provided in the initialization file; and
downloading the list of advertisement files and displaying the advertisement files during the software installation in accordance with the playback parameters.

2. The method of claim 1, further comprising determining the playback parameters in dependence upon the one or more software installation options.

3. The method of claim 2, further comprising providing as playback parameters one or more of playback order, playback duration, playback interval, and playback interruption.

4. The method of any preceding claim, wherein the selection of one or more installation options includes selection of a software product and version and an installation language, and the list of one or more advertisement files in the initialization file corresponds to the selected software product and version and the installation language.

5. The method of claim 4, wherein the advertisement file is any one of pictures, video, sounds, text, or any combination.

6. The method of any preceding claim, wherein the initialization file is downloaded from an ftp server via an Internet connection.

7. The method of claim 6, wherein the list of one or more advertisement files in the initialization file provides one or more URL addresses pointing to the locations of the advertisement files.

8. A system adapted to download and display advertisements during software installation on a device, the system adapted to:
receive a selection of one or more software installation options and consider any additional criteria for selection of an initialization file;
in dependence upon the selection of one or more installation options and any additional criteria, download a corresponding initialization file;
read the downloaded initialization file for a list of one or more advertisement files to be downloaded to the device and played back in accordance with playback parameters provided in the initialization file; and
download the list of advertisement files and displaying the advertisement files during the software installation in accordance with the playback parameters.

9. The system of claim 8, wherein the system is further adapted to determine the playback parameters in dependence upon the one or more software installation options.

10. The system of claim 9, wherein the system is further adapted to provide as playback parameters one or more of playback order, playback duration, playback interval, and playback interruption.

11. The system of any one of claims 8 to 10, wherein the selection of one or more installation options includes selection of a software product and version and an installation language, and the list of one or more advertisement files in the initialization file corresponds to the selected software product and version and the installation language.

12. The system of claim 11, wherein the advertisement file is any one of pictures, video, sounds, text, or any combination.

13. The system of any one of claims 8 to 12, wherein the system is further adapted to download the initialization file from an ftp server via an Internet connection.

14. The system of claim 13, wherein the list of one or more advertisement files in the initialization file provides one or more URL addresses pointing to the locations of the advertisement files.

15. Computer readable media storing computer code that when loaded onto a device adapts the device to download and display advertisements during software installation on the device, the computer readable media comprising code which, when executed by the device, causes the device to carry out the method of any one of claims 1 to 7.
